(19) Europäisches Patentamt / European Patent Office / Office européen des brevets

(11) **EP 4 078 207 B1**

(12) **FASCICULE DE BREVET EUROPEEN**

(45) Date de publication et mention
de la délivrance du brevet:
**07.02.2024 Bulletin 2024/06**

(21) Numéro de dépôt: **20821241.5**

(22) Date de dépôt: **14.12.2020**

(51) Classification Internationale des Brevets (IPC):
*G01R 31/367* (2019.01)   *H02J 7/00* (2006.01)
*B60L 53/30* (2019.01)   *H01M 10/42* (2006.01)
*B60L 53/62* (2019.01)   *B60L 58/12* (2019.01)

(52) Classification Coopérative des Brevets (CPC):
**H02J 7/0047; B60L 53/305; B60L 53/62;
B60L 58/12;** B60L 2250/16; B60L 2260/50;
H02J 2310/48; Y02T 10/70; Y02T 10/7072;
Y02T 90/12; Y02T 90/16

(86) Numéro de dépôt international:
**PCT/EP2020/085989**

(87) Numéro de publication internationale:
**WO 2021/122458 (24.06.2021 Gazette 2021/25)**

(54) **PROCÉDÉ ET DISPOSITIF DE CHARGE D'UNE BATTERIE ÉLECTRIQUE DE VÉHICULE**

VERFAHREN UND VORRICHTUNG ZUM LADEN EINER ELEKTRISCHEN BATTERIE EINES FAHRZEUGS

METHOD AND APPARATUS FOR CHARGING AN ELECTRIC BATTERY OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2019 FR 1914852**

(43) Date de publication de la demande:
**26.10.2022 Bulletin 2022/43**

(73) Titulaire: **Renault s.a.s
92100 Boulogne Billancourt (FR)**

(72) Inventeurs:
• **CHANTREL, Cédric
94220 Charenton Le Pont (FR)**
• **MARSILIA, Marco
94230 Cachan (FR)**

(56) Documents cités:
CN-A- 105 974 321      CN-A- 108 646 190
CN-B- 107 402 355      JP-A- 2018 014 817
KR-A- 20030 049 108      US-A1- 2014 125 348
US-A1- 2014 167 774

**Description**

La présente invention concerne un procédé et un dispositif de charge d'une batterie électrique d'un véhicule.

Pour le reste de la description, les expressions « SOC » pour « State Of Charge » selon la terminologie anglosaxonne et « état de charge » sont équivalentes.

Aujourd'hui les nouvelles générations de batteries de traction des véhicules électriques offrent une capacité plus importante que par le passé, à un prix plus abordable.

Dans ce contexte d'évolution technologique rapide des batteries permettant l'augmentation de leur capacité et la réduction de leur cout d'achat, l'autonomie des véhicules électriques n'est plus un problème pour beaucoup d'utilisateurs. Pour les constructeurs automobiles, il devient alors intéressant de proposer une offre de véhicules électriques diversifiée en termes de capacité. Par exemple pour certains véhicules deux versions différentes embarquant la même batterie ayant une capacité physique de 52 kWh sont proposées : une version ayant une capacité réellement utilisable de 30kWh et l'autre une capacité réellement utilisable de 52kWh. Dans la suite de la présente demande on désignera simplement par « capacité utile » la capacité réellement utilisable.

Actuellement, l'évaluation du temps de charge d'une batterie électrique de véhicule présente une certaine marge d'imprécision, qui ne sera pas satisfaisante pour un utilisateur de ce type de véhicule. De façon générale, il est important que les paramètres caractérisant un véhicule à un instant donné, et qui sont affichés sur un écran d'un tableau de bord dudit véhicule, soient précis et fiables, surtout lorsqu'il s'agit de paramètres caractérisant un véhicule électrique. En effet, des données telles que par exemple une autonomie kilométrique ou un temps de charge d'une batterie électrique sont fondamentales aux yeux d'un utilisateur, et leur fiabilité peut motiver un utilisateur à acquérir un tel véhicule.

La demande US2015/0066837 décrit une méthode d'estimation de la durée de charge totale d'une batterie d'un véhicule électrique basée sur la prédiction de paramètres physiques qui vont influencer cette durée. Parmi ces paramètres figurent par exemple la température de la batterie et la puissance de charge. Même si ce type de méthode accroît la précision sur l'évaluation du temps de charge de la batterie, elle ne peut toutefois pas éliminer totalement une certaine imprécision sur cette évaluation. En particulier, les fluctuations incontrôlables des paramètres de cette méthode peuvent entraîner une variation non linéaire dans le temps de la durée de charge. Par exemple, au bout de deux minutes de charge, le temps de charge peut ne diminuer que d'une minute, ou le contraire. La demande CN108646190A présente des inconvénients similaires.

Ainsi, un procédé de charge d'une batterie électrique d'un véhicule selon l'invention permet d'afficher en permanence dans le véhicule un temps de charge fiable, l'état de charge de la batterie croissant linéairement avec le temps durant tout le temps de charge.

L'invention a pour objet un procédé d'estimation et d'affichage du temps de charge d'une batterie électrique dotée d'une capacité réelle se décomposant en une capacité utile et une capacité de réserve, ou simplement « réserve » dans la suite de la demande, la plage d'état de charge utile étant incluse dans la plage d'état de charge réelle.

L'invention a pour objet un procédé d'estimation et d'affichage du temps de charge d'une batterie électrique pour passer d'un niveau initial d'énergie à un niveau cible d'énergie, la capacité réelle de la batterie se décomposant en une capacité utile et une capacité de réserve, la plage de charge utile étant incluse dans la plage de charge réelle entre un niveau minimum et un niveau maximum d'énergie.

Selon l'invention, le procédé comprend les étapes suivantes telles que définies dans la revendication indépendant 1.

Selon une caractéristique possible de l'invention, le temps total de charge est estimé à partir d'une cartographie comprenant :

- un temps (A) de charge entre le niveau d'énergie initiale et celui correspondant à un état de charge utile de 100%,
- un temps (B) de charge entre le niveau d'énergie cible et celui correspondant à un état de charge utile de 100%,

l'estimation du temps de charge nécessaire pour atteindre la valeur seuil maximale étant donnée par la différence (A)-(B).

L'invention a pour autre objet un dispositif comprenant les moyens matériels et logiciels pour mettre en oeuvre un procédé selon l'invention.

L'invention a pour autre objet un véhicule électrique comprenant un dispositif selon l'invention.

On donne ci-après une description détaillée d'un mode de réalisation préféré d'un procédé d'estimation et d'affichage selon l'invention, en se référant aux figures suivantes :

[Fig. 1] est une vue schématique d'une batterie d'un véhicule dans lequel peut être appliqué un procédé d'estimation et d'affichage selon l'invention

[Fig. 2] est un logigramme présentant les principales étapes d'un procédé selon l'invention,

[Fig. 3A] est un diagramme montrant la variation de SOC en fonction du temps obtenu au moyen d'un procédé selon l'invention pour un premier cas nominal

[Fig. 3B] est un diagramme montrant les périodes d'affichage du temps pour le cas nominal de la figure 3A,

[Fig. 4A] est un diagramme montrant les périodes d'affichage du temps pour un deuxième cas nominal,

[Fig. 4B] est un diagramme montrant la variation du SOC réel et du SOC final en fonction du temps obtenu au moyen d'un procédé selon l'invention pour le deuxième cas nominal,

[Fig. 4C] est un diagramme montrant la variation l'énergie réelle et de l'énergie finale en fonction du temps obtenu au moyen d'un procédé selon l'invention pour le deuxième cas nominal,

[Fig. 5A] est une vue schématique d'une batterie d'un véhicule dans lequel peut être appliqué un procédé d'estimation et d'affichage selon l'invention

[Fig. 5B] est une vue schématique d'une batterie d'un véhicule dans lequel peut être appliqué un procédé d'estimation et d'affichage selon l'invention

[Fig. 6A] est une vue schématique d'une batterie d'un véhicule dans lequel peut être appliqué un procédé d'estimation et d'affichage selon l'invention

[Fig. 6B] est une vue schématique d'une batterie d'un véhicule dans lequel peut être appliqué un procédé d'estimation et d'affichage selon l'invention

[Fig. 7A] est une vue schématique d'une batterie d'un véhicule dans lequel peut être appliqué un procédé d'estimation et d'affichage selon l'invention

[Fig. 7B] est une vue schématique d'une batterie d'un véhicule dans lequel peut être appliqué un procédé d'estimation et d'affichage selon l'invention

[Fig. 7C] est une vue schématique d'une batterie d'un véhicule dans lequel peut être appliqué un procédé d'estimation et d'affichage selon l'invention

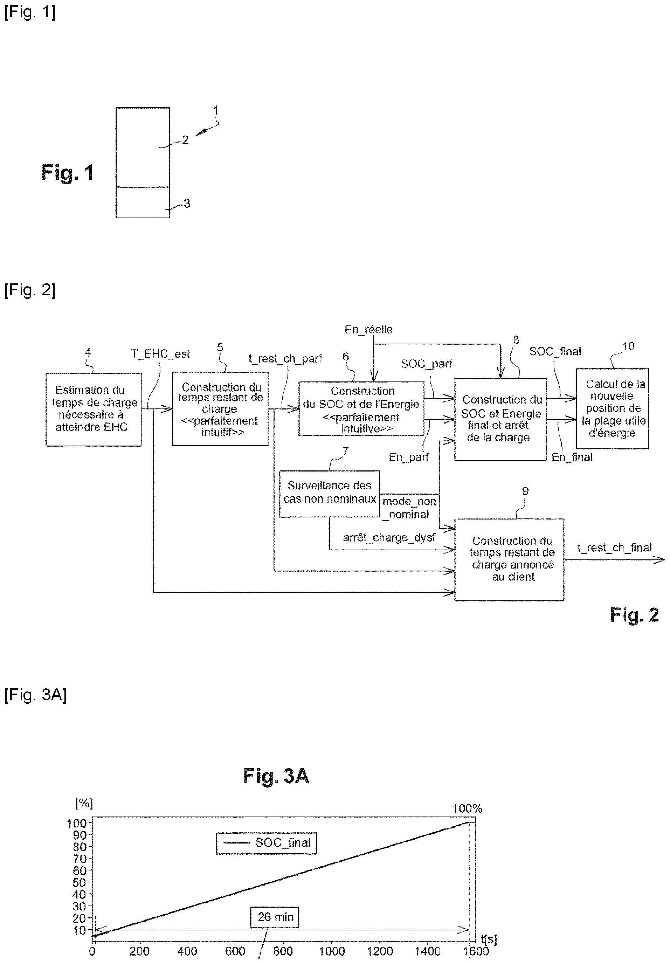

En se référant à la figure 1, un procédé d'estimation d'un temps de charge selon l'invention s'applique à un véhicule comportant une batterie 1 électrique dotée d'une capacité réelle se décomposant en une capacité utile 2 et une réserve 3, la capacité utile 2 étant donc inférieure à sa capacité réelle. Par exemple pour certains véhicules, deux versions différentes embarquant la même batterie ayant une capacité physique de 52 kWh sont proposées : une version ayant une capacité nominale de 30kWh et l'autre de 52kWh. Un procédé d'estimation selon l'invention va tirer bénéfice de cette réserve 3 pour assurer une charge de la batterie 1, au cours de laquelle le SOC et l'énergie vont augmenter linéairement avec le temps et pour laquelle le temps va s'afficher à des intervalles réguliers.
Un procédé d'estimation et d'affichage du temps total de charge de la batterie selon l'invention comprend les principales étapes suivantes :

- Au début de la phase de charge, une étape d'estimation et d'affichage du temps total de charge de la batterie basée sur une valeur de l'état de charge initial utile, et permettant d'atteindre un niveau de charge seuil maximal,
- Une étape de construction d'un état de charge théorique qui permet d'atteindre le niveau de charge seuil maximal exactement dans le temps total initialement affiché, en supposant que ledit état de charge croit de façon linéaire avec le temps,
- Une étape de réajustement au cours du temps de l'état de charge utile en utilisant la réserve pour aligner en temps réel ledit état de charge utile sur l'état de charge théorique, si l'état de charge utile à un instant donné ne permet pas d'atteindre l'état de charge seuil maximal initialement affiché,
- Une étape de détermination et d'affichage du temps de charge restant et de l'état de charge de la batterie à un instant donné, et qui croit linéairement au cours du temps jusqu'à atteindre la valeur seuil maximale.

Un procédé d'estimation selon l'invention est mis en oeuvre dans un véhicule au moyen d'un calculateur doté d'un logiciel adapté, se décomposant en plusieurs blocs.
En se référant à la figure 2, le logiciel comprend un bloc 4 qui est consacré à l'estimation du temps de charge nécessaire à atteindre un niveau d'énergie haut cible EHC correspondant à la valeur seuil maximale. Le bloc 4 estime le temps nécessaire à atteindre le niveau d'énergie haut cible EHC au début d'une nouvelle charge. On appellera *t_EHC_est* cette estimation.

Cette estimation est réalisable facilement à partir d'un module s'appuyant sur une cartographie ou un modèle, d'estimation du temps de charge complète déjà présent dans les véhicules électriques. En effet ce module permet d'obtenir :

- l'estimation du temps de charge, qu'on appellera A, entre le niveau d'énergie actuel, au début de la charge et celui correspondant à un SOC de 100% et
- l'estimation du temps de charge, qu'on appellera B, entre le niveau d'énergie haut cible EHC et celui correspondant à SOC 100%

L'estimation du temps nécessaire à atteindre le niveau d'énergie haut cible EHC est alors obtenu simplement : *t_EHC_est* = A-B.

En se référant à la figure 2, le logiciel comprend un bloc 5 consacré à la construction d'un temps restant de charge qui est parfaitement intuitif.

L'objectif de ce bloc 5 est de construire un signal de « temps restant de charge » parfaitement intuitif pour l'utilisateur, c'est-à-dire montrant une augmentation linéaire de l'état de charge et de l'énergie de la batterie 1 avec le temps, pendant tout le temps de charge de la batterie 1. Le signal de « temps restant de charge » est affiché à l'utilisateur, via le tableau de bord et sur smartphone, et l'informe du temps nécessaire à terminer la charge en cours, c'est-à-dire du temps nécessaire pour que le SOC de la batterie atteigne 100%.

Le bloc 5 produit en sortie le signal « *t_rest_ch_parf* », exprimé en minutes, et qui est construit selon la logique suivante :

$$t\_rest\_ch\_parf(t) = \begin{cases} t\_EHC\_est\,(t0) & \text{à } t = t0 \text{ instant de début de la charge} \\ t\_rest\_ch\_parf(t-1) - 1 & Sinon \end{cases}$$

*t_rest_ch_parf* vaut donc *t_EHC_est* au début de la charge et ensuite, tout au long de la charge, il diminue exactement d'une minute toutes les minutes de façon à atteindre donc la valeur « 0 » en exactement *t_EHC_est* minutes après le début de la charge.

Il s'agit donc d'un temps de charge parfaitement intuitif pour l'utilisateur, du début à la fin de la charge.

En se référant à la figure 2, le logiciel comprend un bloc 6 consacré à la construction d'un SOC et d'une énergie parfaitement intuitifs.

L'objectif de ce bloc 6 est de construire un signal de SOC et d'énergie parfaitement intuitif pour l'utilisateur c'est-à-dire un SOC et une énergie qui augmentent de façon parfaitement linéaire du début à la fin de la charge pour atteindre, dans le cas où la charge ne serait pas interrompue avant par l'utilisateur, le SOC 100% quand le temps restant de charge *t_rest_ch_parf* atteint la valeur de 0.

Ce bloc 6 produit en sortie les signaux *SOC_parf* et *En_parf,* obtenus à partir de la formule :

$$SOC\_parf(t) = SOC\_parf(t-1) + augm\_parf\_SOC$$

Avec,

$$augm\_parf\_SOC =$$

$$\begin{cases} \dfrac{100 - SOC_{parf(t-1)}}{60 \cdot t_{EHC_{est}(t0)}} \cdot SampleT & \text{à } t = t0 \text{ instant de début de la charge} \\ augm\_parf\_SOC(t-1) & Sinon \end{cases}$$

où *SampleT* est la période d'échantillonage de l'algorithme

L'énergie parfaitement intuitive *En_parf* est calculée ainsi :

$$En\_parf(t) = \min\left(En\_reelle\,(t)\,, \frac{SOC\_parf(t)}{100} \cdot capa\_utile\right)$$

Où *En_reelle* est l'énergie réelle de la batterie et *capa_utile* sa capacité utile exploitable par le l'utilisateur.

En se référant à la figure 2, le logiciel comprend un bloc 7 consacré à la surveillance des cas non nominaux.

Le principe d'une charge parfaitement intuitive, en exploitant de la façon décrite dans ce document la marge entre capacité réelle de la batterie et capacité exploitable, est possible dans la grande majorité des cas. Néanmoins dans certains cas de figure spécifiques, comme par exemple un dysfonctionnement d'un organe pendant la charge ou une marge d'énergie réduite à cause d'une température de batterie très faible, l'estimation du temps de charge est très imprécise et une charge parfaitement intuitive ne peut pas être assurée.

L'objectif de ce bloc 7 est d'assurer la robustesse de la stratégie même dans ces cas de figure rares de façon à ce que les informations données au conducteur, comme par exemple le SOC et l'autonomie disponibles ne soient jamais fausses.

Ce bloc 7 produit en sortie un signal booléen « *mode_non_nominal* » qui prend la valeur *1* si au moins un des 2 cas non nominaux suivants se produit, et prend la valeur 0 sinon :

- Un arrêt dysfonctionnel de la charge,
- L'énergie réelle de la batterie dévient égale à l'« énergie parfaite » *En_parf.*

Dans le premier cas de figure la charge est arrêtée avant que le signal *SOC_parf* ait atteint le 100%. L'arrêt de charge dysfonctionnel est communiqué à l'algorithme par l'organe qui a provoqué l'arrêt, ledit organe pouvant par exemple être un chargeur électrique.

Si un arrêt dysfonctionnel de la charge se produit le booléen *arret_charge_dysf* prend la valeur *1*. Ce booléen vaut *0* sinon

Il est à noter qu'un cas de figure équivalent à un arrêt de charge dysfonctionnel pourrait se produire dans le cas d'une durée de charge très surestimée. En effet dans ce cas aussi, le système demandera l'arrêt de la charge avant que le signal *SOC_parf* ait atteint le 100%.

Dans le deuxième cas de figure, en condition nominale l'énergie réelle de la batterie reste toujours supérieure à l'« *énergie parfaite* » *En_parf* mais l'écart entre ces deux grandeurs varie tout au long de la charge parce que l'estimation de temps de charge faite au début de la charge n'est pas parfaite. Dans des cas particuliers où

- la marge d'énergie, qui est l'écart entre énergie réelle et « parfaite », est réduite, à cause d'une température batterie faible, ou
- l'estimation de temps de charge faite au début de la charge est très sous-estimée,

le signal *En_parf* peut, pendant la charge, atteindre la valeur de l'énergie réelle.

En se référant à la figure 2, le logiciel comprend un bloc 8 consacré à la construction d'un SOC et d'une énergie finaux et à l'arrêt de la charge.

Ce bloc 8 réalise la construction du SOC et de l'énergie finaux. Ces derniers correspondent aux signaux parfaitement intuitifs pour l'utilisateur, produits par le bloc 6 sauf dans les rares cas non nominaux indiqués par la valeur 1 du booléen *mode_non_nominal* produit par le bloc 7.

Les signaux *En_final* et *SOC_final* sont construits de la façon suivante :

$$n\_final = \begin{cases} En\_parf & si\ mode\_non\_nominal = 0 \\ \min\,(En\_reelle, capa\_utile) & si\ mode\_non\_nominal = 1 \end{cases}$$

$$Soc\_final = \begin{cases} SOC\_parf & si\ mode\_non\_nominal = 0 \\ \frac{En\_final}{capa\_utile} \cdot 100 & si\ mode\_non\_nominal = 1 \end{cases}$$

Où *capa_utile* est la capacité utile exploitable par l'utilisateur.

En se référant à la figure 2, le logiciel comprend un bloc 9 consacré à la construction du temps restant de charge, annoncé à l'utilisateur.

Ce bloc réalise la construction du temps restant de charge, final annoncé à l'utilisateur (via le tableau de bord, smartphone, etc.).

Le signal *t_rest_ch_final* est construit de la façon suivante :

$$t\_rest\_ch\_final(t)$$

$$= \begin{cases} t\_rest\_ch\_parf(t) & si\ mode\_non\_nominal(t) = 0 \\ t\_EHC\_est(t) & si\ mode\_non\_nominal(t) = 1\ AND\ arret\_charge\_dysf(t) = 0 \\ 0 & si\ mode\_non\_nominal(t) = 1\ AND\ arret\_charge\_dysf(t) = 1 \end{cases}$$

Le temps final restant de charge, annoncé à l'utilisateur correspond donc

- au signal parfaitement intuitif pour le utilisateur produits par le *bloc 2* sauf dans les rares cas non nominaux indiqués par la valeur *1* du booléen *mode_non_nominal* produit par le *bloc 4*.
- Lorsque le signal *mode_non_nominal=1* dû au fait que l'énergie « parfaite » et l'énergie réelle coïncident (*arret_charge_dysf(t)* = 0 : cas 2 dans le paragraphe dédié au bloc 4 ci-dessus) alors le temps restant de charge arrête d'évoluer de façon parfaitement intuitive et devient, jusqu'à à la fin de la charge, égale à l'estimation, faite dans le bloc 1, du temps de charge nécessaire à atteindre le niveau d'énergie haut cible *EHC*.
- Lorsque le signal *mode_non_nominal=1* dû à un arrêt intempestif (dysfonctionnel) de la charge (*arret_charge_dysf(t)* = 1) alors le temps restant de charge passe instantanément à 0 pour signifier à l'utilisateur l'arrêt de la charge (un voyant ou message indiquant au utilisateur le type de dysfonctionnement qui a provoqué l'arrêt de la charge sera logiquement affiché aussi mais cela sort du cadre de cette invention).

En se référant à la figure 2, le logiciel comprend un bloc 10 consacré au calcul de la nouvelle position de la plage utile d'énergie.

La charge réalisée avec cette stratégie est une charge « parfaitement intuitive » dont la durée est, hormis les cas non-nominaux décrits ci-avant, parfaitement égale à celle annoncée à l'utilisateur au début de la charge.

Néanmoins la durée annoncée au début de la charge est une estimation du temps nécessaire pour que l'énergie atteigne la valeur cible *EHC*. Cette estimation n'étant pas parfaite, à la fin de la charge l'erreur inévitablement commise sur cette estimation se traduira par une valeur d'énergie réellement atteinte, légèrement supérieure ou légèrement inférieure à la valeur cible *EHC*.

L'objectif de ce bloc 10 est de « réajuster la position »de la plage d'énergie utile à l'intérieur de la plage de capacité physique à la fin de chaque charge. Cette position sera conservée jusqu'à la charge parfaite suivante, à la fin de laquelle la capacité utile sera repositionnée de nouveau et ainsi de suite.

Pour repositionner la plage d'énergie utile, ce bloc 10 calcule, à la fin de chaque charge, la nouvelle position de l' « énergie 0 » c'est à dire la valeur d'énergie réelle de la batterie qui correspond à une énergie « utile » nulle.

Le signal « *énergie 0* » est donc calculé de la façon suivante :

$$Energie\_0(t) =$$

$$\begin{cases} En\_reelle(tf) - En\_parf(tf) & si\ t = tf\ instant\ de\ fin\ d'une\ charge \\ Energie\_0(t-1) & sinon \end{cases}$$

Le signal « *Energie 0* » ainsi calculé permet ensuite, pendant le roulage qui suit la charge par exemple, de calculer l'énergie utile jusqu'à la charge suivante. Si on appelle *En_utile_hors_charge* cette énergie, elle sera en effet simplement donnée par :

$$En\_utile\_hors\_charge\ (t) = En\_reelle(t) - Energie\_0(t)$$

Ce signal *En_utile_hors_charge* est utilisé notamment pour le calcul du SOC et de l'autonomie quand on n'est pas dans une phase de charge mais par exemple dans une phase de roulage notamment.

Le cas non nominal évoqué précédemment où l'« énergie parfaite » atteint l'énergie réelle de la batterie, correspond donc à Energie_0 = 0 et donc, à une position de la capacité utile tout en bas de la capacité réelle.

Exemples de fonctionnement d'un procédé selon l'invention.

A- Cas nominal

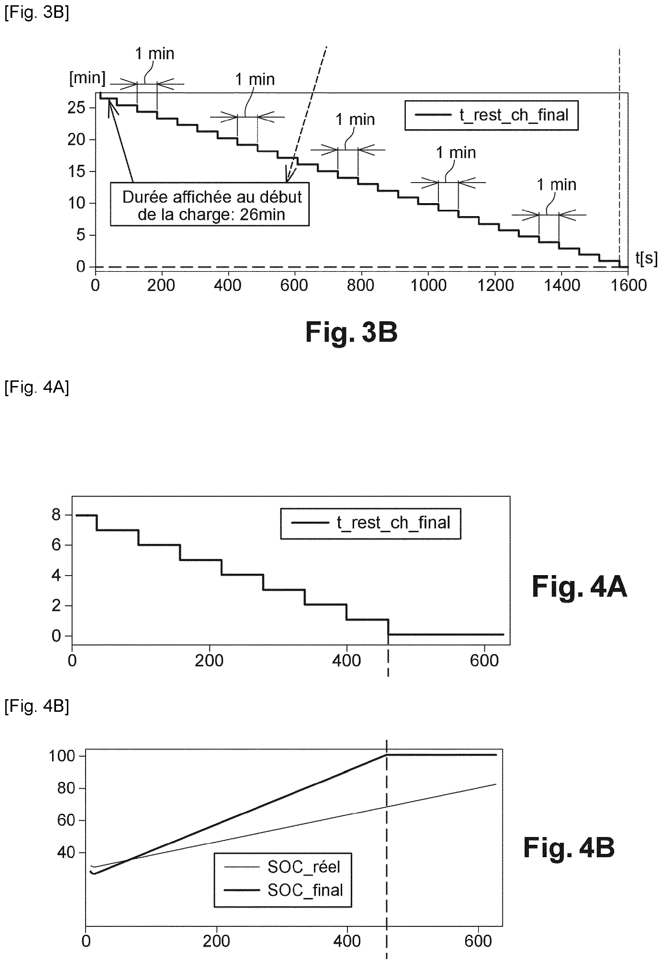

Dans la grande majorité des cas, cette invention assure une charge parfaitement intuitive pour l'utilisateur. En effet, comme le montre la figure 3B, la durée annoncée au début de la charge à l'utilisateur sera parfaitement précise : dans l'exemple de la figure on annonce lorsque l'utilisateur branche sa voiture pour la charger, une durée de charge complète de 26 min et la charge se termine exactement 26 min plus tard. De plus pendant ce temps de charge, le SOC augmente de façon parfaitement linéaire comme le montre la figure 3A, ce qui est le plus intuitif pour l'utilisateur, pour atteindre un sOC de 100% exactement 26 min après le début de la charge, comme initialement annoncé à l'utilisateur.

Actuellement sur certains véhicules, le SOC augmente de façon non linéaire avec un ralentissement à l'approche du 100% peu intuitif pour l'utilisateur. De plus souvent entre 99% et 100% il peut se passer plusieurs dizaines de minutes pouvant aller à plus d'une heure, ce qui est difficilement compréhensible pour l'utilisateur.

Pendant ce temps de charge, en se référant à la figure 3B, le temps restant de charge, annoncé diminue exactement d'une minute toutes les minutes, ce qui est parfaitement intuitif.

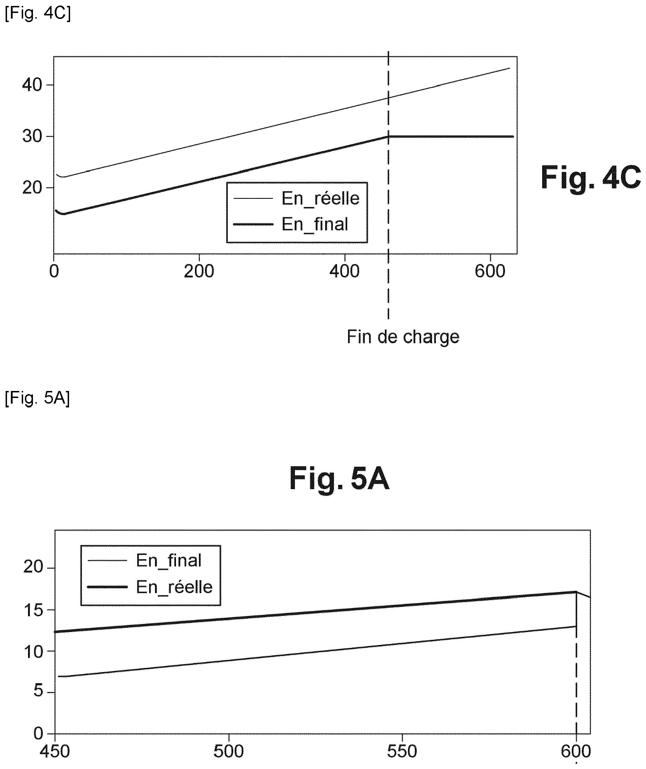

Les figures 4A, 4B et 4C montrent respectivement l'évolution du temps affiché, une comparaison entre le SOC réel et le SOC final au cours du temps, et une comparaison entre l'énergie réelle et l'énergie finale au cours du temps dans le cas nominal de charge.

B-Cas non nominal : arrêt dysfonctionnel de la charge

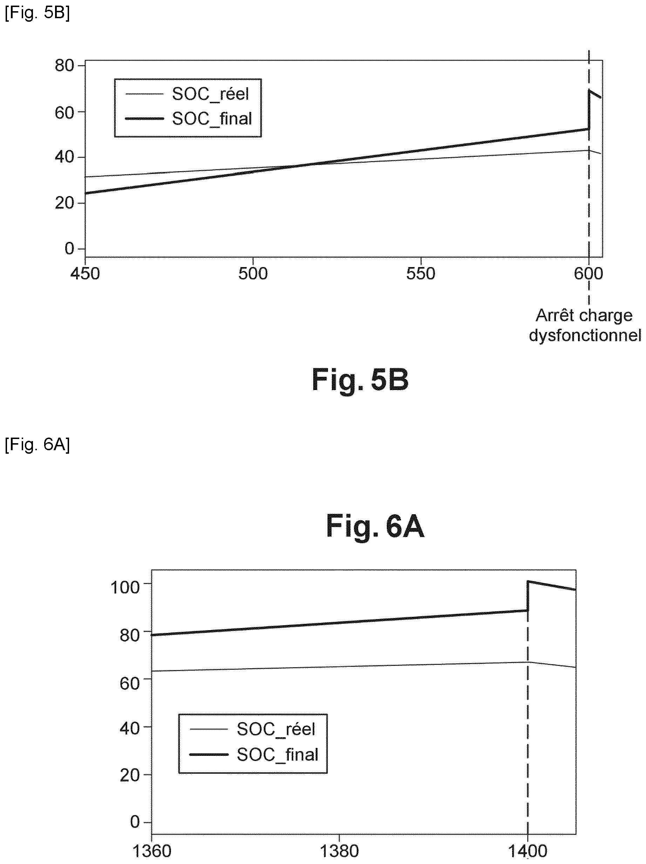

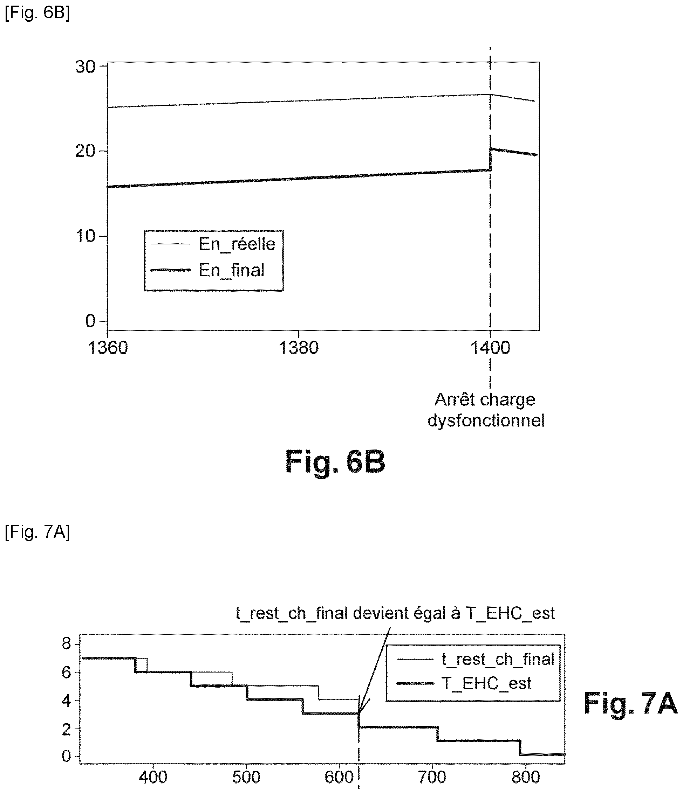

Les figures 5A, 5B, 6A et 6B montrent le comportement de la stratégie dans le cas non nominal d'arrêt dysfonctionnel de la charge, dans le cas par exemple d'un problème rencontré dans la batterie ou le chargeur.

Dans l'exemple de la figure 5A, on remarque que lorsque l'arrêt intempestif de la charge se produit, au bout de 600s dans l'exemple considéré, le signal « En_final » devient égal à l'énergie réelle de la batterie. Ceci permet au conducteur de disposer de toute l'énergie réellement disponible malgré le fait que la charge se soit arrêtée intempestivement avant le 100%. On remarque aussi, en se référant à la figure 5B, qu'au bout de 600s, le SOC passe alors instantanément à la valeur qui fournit le pourcentage correspondant à ce nouveau niveau d'énergie par rapport à la capacité utile, environ 65% dans l'exemple considéré.

La figure 6B montre aussi un cas d'arrêt dysfonctionnel de charge mais contrairement au cas des figures 5A et 5B, l'arrêt de charge se produit alors que l'Energie réelle de la batterie est supérieure à la capacité utile. Dans ce cas de figure, au moment où l'arrêt intempestif de la charge se produit, dans le présent exemple au bout de 1400s, le signal « En_final » passe instantanément à la valeur de la capacité utile. Ceci permet au conducteur de disposer de toute l'énergie correspondante à la capacité utile, comme si la charge s'était correctement déroulée, même si le côté intuitif de la charge a été perdu à cause de la discontinuité du SOC, de l'énergie et du temps restant de charge. En se référant à la figure 6A, de façon cohérente le SOC passe alors instantanément à 100% car toute la capacité utile est disponible.

B-Cas non nominal : l'énergie parfaite atteint l'énergie réelle de la batterie.

Pour rappel, en condition nominale, l'énergie réelle de la batterie reste toujours supérieure à l'« énergie parfaite » En_parf mais l'écart entre ces deux grandeurs varie tout au long de la charge parce que l'estimation du temps de charge faite au début de la charge, n'est pas parfaite. Dans des cas particuliers où

- la marge d'énergie, c'est-à-dire l'écart entre l'énergie réelle et l'énergie « parfaite » est réduite, à cause d'une température de batterie faible ou

- l'estimation de temps de charge faite au début de la charge est très imprécise, par exemple sous-estimée.

le signal En_parf peut, pendant la charge, atteindre la valeur de l'énergie réelle.

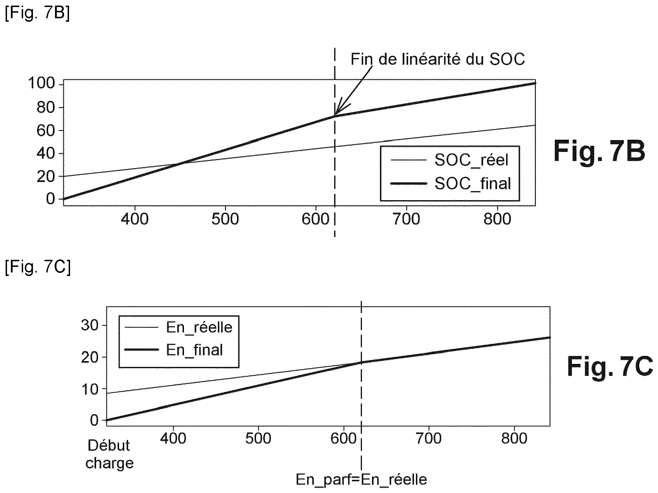

C'est le cas de l'exemple montré aux figures 7A, 7B et 7C. Dans cet exemple l'estimation de temps de charge faite au début de la charge est très sous-estimée et c'est pourquoi on observe sur la figure 7C, que la pente d'augmentation d'En_final est beaucoup plus importante que la pente d'augmentation de l'énergie réelle. Cette imprécision dans l'estimation, implique qu'à l'instant indiqué par le trait en pointillés correspondant à environ à 620s/630s, le paramètre En_parf atteint la valeur de l'énergie réelle. A partir de cet instant et jusqu'à la fin de la charge le signal En_final reste égal à En_reelle ce qui implique la fin de la linéarité d'augmentation du SOC comme indiqué à la figure 7B, et la fin de l'évolution « parfaitement intuitive » du temps restant de charge, indiqué à la figure 7A, qui devient égal à l'estimation T_EHC_est réalisée par le bloc 4.

**Revendications**

1. Procédé d'estimation et d'affichage du temps de charge d'une batterie électrique pour passer d'un niveau initial d'énergie à un niveau cible d'énergie, la capacité réelle de la batterie se décomposant en une capacité utile et une capacité de réserve, une plage de charge utile étant incluse dans une plage de charge réelle entre un niveau minimum et un niveau maximum d'énergie, le niveau cible d'énergie correspondant au niveau maximum d'énergie, **caractérisé en ce qu'**il comprend les étapes suivantes :

   - Au début d'une phase de charge, une étape d'estimation et d'affichage d'un temps total de charge ($t\_EHC\_est$) pour atteindre le niveau cible d'énergie,
   - Une étape d'estimation et d'affichage d'un temps intuitif de charge restant ($t\_rest\_ch\_parf$) pour atteindre le niveau cible, ledit temps intuitif étant initialement égal au temps total de charge ($t\_EHC\_est$) puis étant décrémenté d'une unité de temps à chaque unité de temps qui s'écoule ;
   - Une étape d'estimation d'un état de charge intuitif ($SOC\_parf$) et d'un niveau d'énergie intuitif ($En\_parf$), l'état de charge intuitif étant initialement égal à l'état de charge correspondant au niveau initial d'énergie puis étant incrémenté, à chaque unité de temps qui s'écoule, d'une quantité égale à la différence entre les niveaux de charge correspondant au niveau de charge cible et au niveau de charge initial divisée par le temps total de charge, et le niveau d'énergie intuitif (En_parf) étant la valeur minimum entre un niveau d'énergie réel atteint et le niveau d'énergie correspondant à l'état de charge intuitif calculée ainsi: En_parf (t)=min(En_reelle(t), (SOC_parf(t)/100) x capa_utile) où En_reelle est l'énergie réelle de la batterie, SOC_parf est l'état de charge intuitif et capa_utile est la capacité utile exploitable par l'utilisateur,
   - A la fin de la phase de charge, une étape de réajustement de la plage de charge utile dans la plage de charge réelle, en fixant le niveau minimum d'énergie de la plage de charge utile au niveau d'énergie réel (En_reelle(tf)) atteint à la fin de la phase de charge auquel est soustrait la valeur du niveau d'énergie intuitif (En_parf(tf)) à la fin de la phase de charge.

2. Procédé d'estimation selon la revendication 1, dans lequel le temps total de charge est estimé à partir d'une cartographie comprenant :

   - un premier temps (A) de charge entre le niveau d'énergie initiale et celui correspondant à un état de charge utile de 100%,
   - un deuxième temps (B) de charge entre le niveau d'énergie cible et celui correspondant à un état de charge utile de 100%,

   l'estimation du temps de charge nécessaire pour atteindre la valeur seuil maximale étant donné par la différence entre le premier temps de charge et le deuxième temps de charge (A-B).

3. Dispositif comprenant les moyens matériels et logiciels pour mettre en oeuvre l'une quelconque des revendications précédentes.

4. Véhicule électrique comprenant un dispositif selon la revendication précédente.

**Patentansprüche**

1. Schätz- und Anzeigeverfahren der Ladezeit einer elektrischen Batterie für den Übergang von einem ursprünglichen Energieniveau zu einem Ziel-Energieniveau, wobei die reale Kapazität der Batterie sich in eine Nutzkapazität und eine Reservekapazität zergliedert, wobei ein Nutzladebereich in einem realen Ladebereich zwischen einem minimalen und einem maximalen Energieniveau enthalten ist, wobei das Ziel-Energieniveau dem maximalen Energieniveau entspricht, **dadurch gekennzeichnet, dass** es die folgenden Schritte enthält:

   - zu Beginn einer Ladephase, einen Schritt der Schätzung und Anzeige einer Gesamtladezeit (t_EHC_est), um das Ziel-Energieniveau zu erreichen,
   - einen Schritt der Schätzung und Anzeige einer verbleibenden intuitiven Ladezeit (t_rest_ch_parf), um das Zielniveau zu erreichen, wobei die intuitive Zeit ursprünglich gleich der Gesamtladezeit (t_EHC_est) ist, dann bei jeder ablaufenden Zeiteinheit um eine Zeiteinheit dekrementiert wird;
   - einen Schritt der Schätzung eines intuitiven Ladezustands (SOC_parf) und eines intuitiven Energieniveaus (En_parf), wobei der intuitive Ladezustand ursprünglich gleich dem Ladezustand ist, der dem ursprünglichen Energieniveau entspricht, dann bei jeder ablaufenden Zeiteinheit um eine Menge gleich der Differenz zwischen den Ladeniveaus entsprechend dem Ziel-Ladeniveau und dem ursprünglichen Ladeniveau dividiert durch die Gesamtladezeit inkrementiert wird, und das intuitive Energieniveau (En_parf) der Mindestwert zwischen einem erreichten realen Energieniveau und dem Energieniveau entsprechend dem intuitiven Ladezustand ist, der so berechnet wird: En_parf(t)=min(En_reelle(t), (SOC_pari(t)/100) x capa_utile), wobei En_reelle die reale Energie der Batterie ist, SOC_parf der intuitive Ladezustand ist, und capa_utile die vom Benutzer verwertbare Nutzkapazität ist,

- am Ende der Ladephase, einen Schritt der Neuanpassung des Nutzladebereichs im realen Ladebereich, indem das Mindestenergieniveau des Nutzladebereich auf dem realen Energieniveau (En_reelle(tf)) festgelegt wird, das am Ende der Ladephase erreicht wird, von dem der Wert des intuitiven Energieniveaus (En_parf(tf)) am Ende der Ladephase subtrahiert wird.

2. Schätzverfahren nach Anspruch 1, wobei die Gesamtladezeit ausgehend von einem Kennfeld geschätzt wird, das enthält:

- eine erste Ladezeit (A) zwischen dem ursprünglichen Energieniveau und demjenigen entsprechend einem Nutzladezustand von 100%,
- eine zweite Ladezeit (B) zwischen dem Ziel-Energieniveau und demjenigen entsprechend einem Nutzladezustand von 100%,

wobei die Schätzung der Ladezeit, die notwendig ist, um den maximalen Schwellwert zu erreichen, durch die Differenz zwischen der ersten Ladezeit und der zweiten Ladezeit (A-B) angegeben wird.

3. Vorrichtung, die die Hardware- und Software-Einrichtungen enthält, um einen der vorhergehenden Ansprüche durchzuführen.

4. Elektrofahrzeug, das eine Vorrichtung nach dem vorhergehenden Anspruch enthält.

## Claims

1. Method for estimating and displaying the time it will take to charge an electric battery from an initial level of energy to a target level of energy, the actual capacity of the battery being made up of a useful capacity and a reserve capacity, a useful charging range being included within an actual charging range between a minimum and a maximum level of energy, the target level of energy corresponding to the maximum level of energy, **characterized in that** the method comprises the following steps:

- at the start of a charging phase, a step of estimating and displaying a total charging time ($t\_EHC\_est$) required to reach the target level of energy,
- a step of estimating and displaying an intuitive remaining charging time ($t\_rest\_ch\_parf$) required to reach the target level, said intuitive time initially being equal to the total charging time ($t\_EHC\_est$) then being decremented by one unit of time for each unit of time which passes;
- a step of estimating an intuitive state of charge ($SOC\_parf$) and an intuitive energy level ($En\_parf$), the intuitive state of charge initially being equal to the state of charge corresponding to the initial level of energy then being incremented, for each unit of time which passes, by an amount equal to the difference between the levels of charge corresponding to the target level of charge and the initial level of charge divided by the total charging time, and the intuitive energy level (En_parf) being the minimum value among an actual energy level reached and the energy level corresponding to the intuitive state of charge calculated in the following way: En_parf (t) = min(En_reelle(t), (SOC_parf(t)/100) x capa_utile), where En_reelle is the actual energy of the battery, SOC_parf is the intuitive state of charge and capa_utile is the useful capacity that is able to be used by the user,
- at the end of the charging phase, a step of readjusting the useful charging range within the actual charging range by setting the minimum level of energy of the useful charging range to the actual energy level (En_reelle(tf)) reached at the end of the charging phase, from which the value of the intuitive energy level (En_parf(tf)) is subtracted at the end of the charging phase.

2. Estimation method according to Claim 1, wherein the total charging time is estimated on the basis of a map comprising:

- a first charging time (A) between the initial energy level and that level corresponding to a useful state of charge of 100%,
- a second charging time (B) between the target energy level and that level corresponding to a useful state of charge of 100%,

the estimate of the charging time required to reach the maximum threshold value being provided by the difference between the first charging time and the second charging time (A-B).

3. Device comprising hardware and software means for carrying out either one of the preceding claims.

4. Electric vehicle comprising a device according to the preceding claim.

[Fig. 1]

**Fig. 1**

[Fig. 2]

**Fig. 2**

[Fig. 3A]

**Fig. 3A**

[Fig. 3B]

**Fig. 3B**

[Fig. 4A]

**Fig. 4A**

[Fig. 4B]

**Fig. 4B**

[Fig. 4C]

Fig. 4C

Fin de charge

[Fig. 5A]

Fig. 5A

[Fig. 5B]

Arrêt charge
dysfonctionnel

# Fig. 5B

[Fig. 6A]

# Fig. 6A

[Fig. 6B]

Arrêt charge
dysfonctionnel

# Fig. 6B

[Fig. 7A]

t_rest_ch_final devient égal à T_EHC_est

# Fig. 7A

[Fig. 7B]

Fin de linéarité du SOC

**Fig. 7B**

- SOC_réel
- SOC_final

[Fig. 7C]

- En_réelle
- En_final

**Fig. 7C**

Début charge

En_parf=En_réelle

**RÉFÉRENCES CITÉES DANS LA DESCRIPTION**

**Documents brevets cités dans la description**

- US 20150066837 A
- CN 108646190 A